# EUROPÄISCHE PATENTSCHRIFT

(11) **EP 3 423 722 B1**
(45) Veröffentlichungstag und Bekanntmachung des Hinweises auf die Patenterteilung: **18.09.2019**
(21) Anmeldenummer: 17706454.0
(22) Anmeldetag: 21.02.2017
(51) Int. Cl.: F16B 13/06

(54) **VERFAHREN ZUM HERSTELLEN EINES SPREIZANKERS MITTELS DURCHMESSER-REDUZIERENS EINES HÜLSENROHLINGS**
METHOD FOR PRODUCING AN EXPANSION ANCHOR BY REDUCING THE DIAMETER OF A SLEEVE BLANK
PROCEDE DE FABRICATION D'UNE CHEVILLE EXTENSIBLE PAR REDUCTION DU DIAMETRE D'UNE EBAUCHE DE MANCHON

(30) Priorität: 01.03.2016 EP 16157975
(43) Veröffentlichungstag der Anmeldung: 09.01.2019
(73) Patentinhaber: Hilti Aktiengesellschaft, 9494 Schaan (LI)
(72) Erfinder: DOMANI, Guenter, 88138 Weissensberg (DE); SHIMAHARA, Hideki, 9470 Buchs (CH); HAEUSSLER, Karl, 7222 Lunden (CH)
(74) Vertreter: Hilti Aktiengesellschaft Corporate Intellectual Property
(86) Internationale Anmeldenummer: PCT/EP2017/053847
(87) Internationale Veröffentlichungsnummer: WO 2017/148731

(56) Entgegenhaltungen:
- EP-A1- 2 848 825
- DE-A1- 3 120 809

## Beschreibung

Die Erfindung betrifft ein Verfahren zum Herstellen eines Spreizankers gemäss dem Oberbegriff des Anspruchs 1, bei dem ein Bolzen bereitgestellt wird, der einen Spreizkörper zum Aufspreizen einer den Bolzen umgebenden Spreizhülse aufweist, ein ringförmiger Hülsenrohling mit einer Öffnung bereitgestellt wird, der Bolzen in die Öffnung des ringförmigen Hülsenrohlings eingebracht wird, und der ringförmige Hülsenrohling durchmessereduziert wird während sich der Bolzen in der Öffnung des ringförmigen Hülsenrohlings befindet.

Ein gattungsgemässes Verfahren ist aus der DE3120809 A1 bekannt.

Spreizhülsen für Spreizanker werden häufig aus Blechabschnitten hergestellt, die zuerst gestanzt und gegebenenfalls geprägt und sodann um den Bolzen gebogen werden. Ein entsprechendes Verfahren ist beispielsweise in der EP 1 561 523 A1 beschrieben.

Die US 4334813 A lehrt, durch Stanzen und Biegen zuerst zwei Halbschalen zu fertigen, welche dann am Bolzen unter Bildung der Spreizhülse miteinander verbunden werden.

Die EP 0 627 567 A1 beschreibt ein Verfahren zum Herstellen einer Spreizhülse, bei dem in einem ersten Schritt ein Rohling bereitgestellt wird, welcher einen zylindrischen Kragen und mehrere Segmente aufweist, die vom Kragen radial nach aussen abstehen. In einem anschliessenden Schritt werden die Segmente nach innen in eine Position gebogen, in der sie die Achse des Kragens zylindersegmentartig umgeben.

Die JP 51142704 U1 beschreibt ein Fertigungsverfahren für einen Anker, bei dem ein konusförmiges Element mit ringförmigen Rillen und ein hülsenförmiges Element bereitgestellt werden. Das hülsenförmige Element wird sodann so durch Rollen deformiert, dass es in die ringförmigen Rillen des konusförmigen Elements in Eingriff gelangt.

Die EP 2 848 825 A1 zeigt einen Spreizanker, bei dem der Bolzen im Halsbereich eine Aussenkontur mit einer Vielzahl von Nuten aufweist, welche sich längs des Bolzens erstrecken, und bei dem die Spreizhülse auf ihrer Innenseite eine Innenkontur mit einer Vielzahl von Stegen aufweist, welche unter Bildung einer Verzahnung in die Nuten eingreifen, und durch welche die Wandstärke der Spreizhülse jeweils lokal erhöht ist. Hierdurch kann eine Spreizreserve geschaffen werden, die eine besonders grosse Spreizung erlaubt, ohne den Bolzen im Halsbereich wesentlich schwächen zu müssen.

Aufgabe der Erfindung ist es, ein Verfahren zum Herstellen eines Spreizankers anzugeben, bei dem bei besonders hoher Wirtschaftlichkeit eine besonders hohe Leistungsfähigkeit, Zuverlässigkeit und Einsatzvielfalt gegeben ist.

Die Aufgabe wird erfindungsgemäss durch ein Herstellungsverfahren mit den Merkmalen des Anspruchs 1 gelöst. Bevorzugte Ausführungsformen sind in den abhängigen Ansprüchen angegeben.

Bei einem erfindungsgemässen Verfahren zum Herstellen eines Spreizankers ist vorgesehen, dass
- ein Bolzen bereitgestellt wird, der einen Spreizkörper zum Aufspreizen einer den Bolzen umgebenden Spreizhülse aufweist,
- ein ringförmiger Hülsenrohling mit einer Öffnung bereitgestellt wird,
- der Bolzen, insbesondere der den Spreizkörper aufweisende Bolzen, in die Öffnung des ringförmigen Hülsenrohlings eingebracht wird, und
- der ringförmige Hülsenrohling durchmessereduziert wird während sich der Bolzen, insbesondere der den Spreizkörper aufweisende Bolzen, in der Öffnung des ringförmigen Hülsenrohlings befindet.
Das Verfahren ist dadurch gekennzeichnet, dass das Bereitstellen des Hülsenrohlings das Formen des Hülsenrohlings zu einem Napf in einem Fliesspressverfahren umfasst.

Im Rahmen der Erfindung wurde beobachtet, dass Spreizhülsen, die durch Biegen eines Blechabschnitts um einen Bolzen herum gefertigt werden, häufig Aussenquerschnitte haben, welche von einer exakten Kreisform abweichen. Dies kann unter anderem darin begründet liegen, dass die Blechabschnitte aufgrund ihrer Elastizität und dem daraus resultierenden Rückfedern am Ende des Biegeprozesses häufig einige Grad weit über die Kreisform hinaus überbogen werden müssten, um eine Kreisform zu erhalten, dass ein hinreichendes Überbiegen aber regelmässig aufgrund des innenliegenden Bolzens nicht möglich ist. Die von einer Kreisform abweichenden Aussenquerschnitte können jedoch zur Folge haben, dass vergleichsweise viele Hammerschläge zum Eintreiben der Hülse in ein Bohrloch beim Installieren des Ankers erforderlich sind. Wird zusätzlich noch eine innenprofilierte Hülse benötigt, wie beispielsweise für den Anker der EP 2 848 825 A1, so kann sich der zu biegende profilierte Blechabschnitt aufgrund der durch die Profilierung bewirkten variablen Steifigkeit inhomogen beim Biegeprozess verhalten, was zu noch grösseren Formabweichungen führen kann. Insbesondere kann dies unter Umständen zur Folge haben, dass das Innenprofil der Spreizhülse nur unzulänglich mit dem Aussenprofil des Bolzens korrespondiert. Hierdurch kann unter anderem die Reibung zwischen dem Bolzen und der Spreizhülse beim Installieren des Ankers erhöht sein und die Leistungsfähigkeit des Ankers vermindert sein.

Hier setzt die Erfindung an und sieht eine alternative Fertigungsmethode vor. Insbesondere wird erfindungsgemäss ein rohrförmiger Hülsenrohling verwendet, der einen so grossen Aussendurchmesser aufweist, dass er auf den Bolzen aufgeschoben werden kann, dies vorzugsweise über den Spreizkörper hinweg. Nachdem der Hülsenrohling auf diese Weise auf dem Bolzen angeordnet wurde, wird der Hülsenrohling sodann, insbesondere durch plastisches Verformen des Hülsenrohlings, durchmesserreduziert und zur fertigen Spreizhülse geformt. Demgemäss wird der Hülsenrohling im Anschluss an das Einbringen des Bolzens in die Öffnung des ringförmigen Hülsenrohlings durchmessereduziert.

Durch eine solche Verfahrensführung können einerseits sehr runde und somit zuverlässig arbeitende Spreizhülsen erhalten werden, insbesondere weil in einfacher Weise mit geschlossen ringförmigen Hülsenrohlingen gearbeitet werden kann, bei denen, im Gegensatz zum Biegen eines Blechabschnitts, keine wesentlichen Formabweichungen durch ein Rückfedern auftreten. Da darüber hinaus die verwendeten ringförmigen Hülsenrohlinge vergleichsweise einfach aus einem Draht gefertigt werden können, ist es erfindungsgemäss möglich, Draht als Ausgangsmaterial für die Herstellung der Hülse einzusetzen, welcher häufig kostengünstiger ist als Bandmaterial. Das erfindungsgemässe Verfahren kann darüber hinaus insbesondere bei Ankern vorteilhaft sein, bei denen die Spreizhülse ein Innenprofil aufweist, welches mit einem Aussenprofil am Bolzen korrespondiert und mit dem Aussenprofil am Bolzen verzahnt ist, denn das erfindungsgemässe Verfahren erlaubt es einerseits, die Spreizhülse besonders genau relativ zum Bolzen zu positionieren, und andererseits ist erfindungsgemäss die Verformung des Hülsenrohlings und damit seiner Innenkontur beim Anbringen des Hülsenrohlings an den Bolzen besonders gleichförmig und gut reproduzierbar, so dass unerwünschte Fehlanpassungen zwischen den beiden korrespondierenden Profilen besonders zuverlässig vermieden werden können. Ferner können mit dem erfindungsgemässen Verfahren, im Gegensatz zu einem Biegeverfahren, in besonders einfacher Weise Spreizanker mit geschlossenen Spreizhülsen erhalten werden, indem nämlich mit einem geschlossen ringförmigen Hülsenrohling gearbeitet wird. Hierdurch können besonders steife Spreizhülsen erhalten werden, was im Hinblick auf das Auszugsverhalten vorteilhaft sein kann. Darüber hinaus können schlitzlose Spreizhülsen oder Spreizhülsen mit besonders kleiner Schlitzbreite gefertigt werden, mit denen die Spreizkraft im Wesentlichen entlang des gesamten Hülsenumfangs auf den Beton übertragen werden kann. Hierdurch kann unter anderem die Auszugskraft in einem Lastbereich nahe dem Betonversagen erhöht werden.

Durch das erfindungsgemässe Herstellungserfahren können also besonders vorteilhafte Ankerformen realisiert werden, die in anderen Herstellungserfahren nicht oder nur mit hohem Aufwand zugänglich sind.

Der Hülsenrohling ist erfindungsgemäss ringförmig ausgebildet. Insbesondere bildet er einen Ring, welcher die Öffnung des Hülsenrohlings umgibt. Im Laufe des erfindungsgemässen Verfahrens wird der Bolzen in die Öffnung des ringförmigen Hülsenrohlings eingebracht. Infolge dieses Verfahrensschritts umgibt der Hülsenrohling den Bolzen ringartig.

Das Durchmesserreduzieren kann vorzugsweise zumindest im Aussendurchmesser des Hülsenrohlings, insbesondere sowohl im Innendurchmesser des Hülsenrohlings als auch im Aussendurchmesser des Hülsenrohlings, erfolgen. Das Durchmesserreduzieren erfolgt an zumindest einer Winkellage des Hülsenrohlings, vorzugsweise an mehreren Winkellagen des Hülsenrohlings, insbesondere im Wesentlichen am gesamten Umfang des Hülsenrohlings. Mit dem Durchmesserreduzieren kann auch eine lokale Vergrösserung des Durchmessers, beispielsweise durch Bildung einer oder mehrerer Ausknickungen, einhergehen, wie weiter unten näher beschrieben ist.

Erfindungsgemäss wird aus dem Hülsenrohling die Spreizhülse gefertigt. Die Spreizhülse, welche den Bolzen umgibt, wird also aus dem Hülsenrohling erhalten. In einer ersten Variante kann die fertige Spreizhülse bereits unmittelbar aus dem Schritt des Durchmesserreduzierens erhalten werden. In einer zweiten Variante können sich an das Durchmesserreduzieren noch ein oder mehrere Endbearbeitungsschritte des Hülsenrohlings anschliessen, bis aus diesem schliesslich die fertige Spreizhülse erhalten wird. Somit wird aus dem durchmesserreduzierten Hülsenrohling, unmittelbar oder optional nach weiteren Fertigungsschritten, die Spreizhülse des Spreizankers erhalten.

Der Hülsenrohling kann insbesondere ein Rohrstück sein. Vorzugsweise kann der Hülsenrohling und/oder die Spreizhülse länglich sein, das heisst die Ausdehnung in Axialrichtung kann grösser als die Querschnittsausdehnung sein. Das Einbringen des Bolzens in den Hülsenrohling kann durch Aufschieben des Hülsenrohlings auf den feststehenden Bolzen, durch Einschieben des Bolzens in den feststehenden Hülsenrohling oder durch eine kombinierte Bewegung erfolgen, bei der sowohl der Hülsenrohling als auch der Bolzen bewegt wird.

Der Spreizkörper kann den Bolzen vollständig umlaufen. Am Spreizkörper kann sich der Querschnitt des Bolzens, vorzugsweise kontinuierlich und/oder vorzugsweise nach vorne hin, erweitern. Der Spreizkörper kann insbesondere ein Spreizkonus sein. Vorzugsweise ist der Spreizkörper zumindest axial fest, besonders bevorzugt fest, am Bolzen angeordnet. Insbesondere kann der Spreizkörper einstückig mit dem Bolzen ausgebildet sein.

Soweit von "radial", "axial" und "Umfangsrichtung" die Rede ist, kann sich dies insbesondere auf die Längsachse des Bolzens, des Hülsenrohlings und/oder der Spreizhülse beziehen, die vorzugsweise die Symmetrie- und/oder Mittelachse des Bolzens, des Hülsenrohlings beziehungsweise der Spreizhülse sein kann.

Der Spreizkörper und/oder der Bolzen weisen vorzugsweise ein Metallmaterial auf, welches auch beschichtet sein kann.

Erfindungsgemäss kann zwischen dem Spreizkörper und der Spreizhülse ein Keilgetriebe gebildet sein, welches eine axiale Relativbewegung zwischen dem Spreizkörper und der Spreizhülse in eine radiale Bewegungskomponente der Spreizhülse umwandelt. Vorzugsweise kann somit die Spreizhülse vom Spreizkörper radial nach aussen gedrängt und dabei gegen die Bohrlochwand im Substrat gepresst werden, wenn der Spreizkörper, insbesondere zusammen mit dem Bolzen, in Auszugsrichtung relativ zur Spreizhülse axial versetzt wird. Hierdurch wiederum kann der Spreizanker im Bohrloch verankert werden. Der Spreizkörper kann also zum radialen Anpressen der Spreizhülse an eine Wand eines Bohrlochs dienen und/oder eine Überzugszone für die Spreizhülse bilden. Vorzugsweise verläuft die Auszugsrichtung parallel zur Längsachse des Bolzens und/oder zeigt aus dem Bohrloch heraus. Am Spreizkörper kann der Abstand der Bolzenoberfläche von der Längsachse des Bolzens entgegen der Auszugsrichtung, das heisst mit zunehmendem Abstand von der Lastaufnahmeeinrichtung, zumindest bereichsweise zunehmen.

Der Spreizanker kann bevorzugt ein kraftkontrolliert spreizender Spreizanker sein, insbesondere ein sogenannter Anker des Bolzentyps. Bei einem Anker des Bolzentyps kann der Spreizkörper zumindest axial fest am Bolzen angeordnet sein. In diesem Fall wird der Spreizkörper beim Installieren des Spreizankers durch eine gemeinsame axiale Bewegung des Bolzens und des Spreizkörpers relativ zur Spreizhülse an die Spreizhülse angepresst. Der Spreizkörper ist dabei vorzugsweise einstückig mit dem Bolzen ausgebildet.

Besonders bevorzugt ist es, dass der Hülsenrohling durch Aufbringen von Radialkräften auf den Hülsenrohling durchmessereduziert wird. Demgemäss wird der Hülsenrohling vorzugsweise auf den Bolzen aufgepresst. Hierdurch kann eine besonders einfache Verfahrensführung erreicht werden.

Insbesondere kann der Hülsenrohling durch Anpressen, vorzugsweise radiales Anpressen, zumindest einer Backe an den Hülsenrohling durchmesserreduziert werden. Dies kann die Verfahrensführung weiter vereinfachen. Darüber hinaus kann bei Verwendung einer Backe gleichzeitig mit dem Durchmesserreduzieren auch eine Struktur in die Aussenseite des Hülsenrohlings eingebracht werden. Die zumindest eine Backe wird im erfindungsgemässen Verfahren vorzugsweise in radialer Richtung bewegt.

Besonders bevorzugt ist es, dass der Hülsenrohling durch gleichzeitiges Anpressen, vorzugsweise radiales Anpressen, mehrerer Backen an den Hülsenrohling durchmesserreduziert wird. Insbesondere können alle auf den Hülsenrohling wirkenden Backen beim Durchmesserreduzieren simultan radial bewegt werden, wodurch Spreizhülsen mit einer besonders guten Rundheit erhalten werden können.

Alternativ oder zusätzlich kann vorgesehen sein, dass der Hülsenrohling durch Einbringen des Hülsenrohlings in eine Reduziermatritze durchmesserreduziert wird. Die Reduziermatritze kann ein Werkzeug mit einer Werkzeugöffnung, insbesondere Durchgangsöffnung, sein, welche querschnittskleiner als der Hülsenrohling ist. Beim axialen Einbringen des Hülsenrohlings in die Reduziermatritze wird der Hülsenrohling somit von der Wand der Werkzeugöffnung radial komprimiert. Das Durchmesserreduzieren mittels der Reduziermatritze kann alternativ zum Durchmesserreduzieren mittels Backenanpressen, aber auch als zusätzlicher Verfahrensschritt hierzu vorgesehen werden.

Grundsätzlich könnte der Hülsenrohling offen ringförmig sein. Besonders bevorzugt ist es jedoch, dass der Hülsenrohling einen geschlossenen Ring bildet, der die Öffnung umgibt. Insbesondere kann also der Hülsenrohling ein topologisches Geschlecht von mindestens 1 aufweisen. Demgemäss wird der Bolzen im erfindungsgemässen Verfahren in den geschlossenen Ring des Hülsenrohlings eingebracht. Wie auch schon weiter oben erläutert können bei geschlossenen Hülsenrohlingen besonders geringe Formabweichungen erzielt werden, da ein unerwünschtes Rückfedern an offenen Enden entfällt. Darüber hinaus können in besonders einfacher Weise Spreizanker mit geschlossenen Spreizhülsen erhalten werden. Da derartige Spreizhülsen regelmässig steifer sind als gebogene Hülsen mit offenem Schlitz, kann hierdurch das Auszugsverhalten des Spreizankers verbessert werden. Da darüber hinaus mit geschlossenen Spreizhülsen die Spreizkraft besonders gleichmässig am Umfang der Spreizhülse verteilt werden kann, können besonders hohe Auszugskräften, insbesondere nahe dem Betonversagen, erreicht werden. Schliesslich kann bei einer geschlossenen Spreizhülse in besonders einfacher Weise eine Beschichtung, beispielsweise eine reibungserhöhende Beschichtung, auf der Hülsenmantelfläche zum Beispiel durch Tampondruck aufgetragen werden, ohne dass die Gefahr besteht, dass die Beschichtung unbeabsichtigt zwischen die Spreizhülse und den Bolzen gelangt.

Besonders zweckmässig ist es, dass beim Einbringen des Bolzens in die Öffnung des Hülsenrohlings der Spreizkörper zumindest bereichsweise durch den Hülsenrohling hindurchschoben wird. Beim Einbringen des Bolzens in die Öffnung tritt also der Spreizkörper in den Hülsenrohling ein und zumindest bereichsweise, vorzugsweise vollständig, am gegenüberliegenden, vorderen Ende des Hülsenrohlings wieder aus dem Hülsenrohling hervor. Insbesondere wird der Bolzen mit seinem Spreizkörper voran und/oder seinem vorderen Ende voran in die Öffnung des Hülsenrohlings eingebracht. Vorzugsweise ist die Öffnung des Hülsenrohlings demgemäss zumindest zum Zeitpunkt des Einbringens des Bolzens in die Öffnung querschnittsgrösser als der Spreizkörper, so dass der Hülsenrohling über den Spreizkörper gestreift werden kann. Ein bolzenvorderseitiges Einführen des Bolzens in die Spreizhülse kann die Verfahrensführung weiter vereinfachen und insbesondere aufgrund der regelmässig kürzeren Wege auch beschleunigen.

Eine weitere bevorzugte Ausgestaltung der Erfindung liegt darin, dass der Hülsenrohling durchmessereduziert und hierbei zumindest einseitig axial am Bolzen festgelegt wird während sich der Bolzen in der Öffnung des ringförmigen Hülsenrohlings befindet. Besonders bevorzugt ist es, dass der Hülsenrohling hierbei am Spreizkörper einseitig axial am Bolzen festgelegt wird. Gemäss dieser Ausführungsform wird durch das Komprimieren und Durchmesserreduzieren des Hülsenrohlings zumindest ein einseitiges, vorzugsweise vorderes, Axiallager für den Hülsenrohling am Bolzen gebildet. Insbesondere wird der Querschnitt der Öffnung des Hülsenrohlings so weit reduziert, dass der Hülsenrohling nach dem Durchmesserreduzieren nicht mehr auf dem Weg vom Bolzen entfernt werden kann, auf dem er zuvor auf den Bolzen gebracht wurde. Vorzugsweise wird der Querschnitt der Öffnung des Hülsenrohlings so weit reduziert, dass die Spreizhülse nach dem Durchmesserreduzieren nicht mehr über den Spreizkörper geschoben werden kann, das heisst insbesondere kann der Querschnitt der Öffnung des Hülsenrohlings beim Durchmesserreduzieren so weit reduziert werden, dass der Querschnitt der Öffnung fortan kleiner ist als der Querschnitt des Spreizkörpers. Hierdurch kann in verfahrenstechnisch besonders einfacher Weise und bei besonders guter Leistungsfähigkeit des Spreizankers eine Verliersicherung für die Spreizhülse gebildet werden.

Es ist auch besonders vorteilhaft, dass der Bolzen einen Axialanschlag für den Hülsenrohling aufweist, und dass der Bolzen, insbesondere vor dem Durchmesserreduzieren, so tief in die Öffnung des Hülsenrohlings eingebracht wird bis der Hülsenrohling am Axialanschlag anschlägt. Insbesondere kann hierzu die Öffnung des Hülsenrohlings querschnittskleiner als der Axialanschlag ausgeführt sein. Durch die vorteilhafte Ausgestaltung kann eine besonders einfache und zuverlässige Positionierung des Hülsenrohlings realisiert werden. Der Axialanschlag kann so konfiguriert werden, dass er beim fertigen Spreizanker als Mitnehmer für die Spreizhülse beim Einbringen des Spreizankers in das Bohrloch dienen kann. Der Axialanschlag kann insbesondere an einem Bund, vorzugsweise einem ringförmigen Bund, gebildet sein, der insbesondere einstückig mit dem Bolzen ausgeführt sein kann.

Eine weitere bevorzugte Weiterbildung der Erfindung besteht darin, dass der bereitgestellte Hülsenrohling zumindest eine lokale Wandstärkenverringerung aufweist, vorzugsweise mehrere lokale Wandstärkenverringerungen. Diese lokale Wandstärkenverringerung kann beim Installieren des Spreizankers und radialen Spreizen der fertigen Spreizhülse beim Entlanggleiten am Spreizkörper gezielt aufreissen. Damit können mittels der lokalen Wandstärkenverringerung in besonders einfacher Weise Spreizlappen der Spreizhülse definiert werden. Darüber hinaus kann die lokale Wandstärkenverringerung den Materialüberschuss, der beim Durchmesserreduzieren des Hülsenrohlings anfällt, aufnehmen und eine gezielte Materialschwächung und insbesondere eine Stauchzone bilden, an welcher der Hülsenrohling beim Durchmesserreduzieren bevorzugt verformt wird. Damit kann das Deformationsverhalten beim Durchmesserreduzieren gezielt beeinflusst werden. Insbesondere können gering deformierte Hülsenbereiche definiert werden, was insbesondere dann vorteilhaft sein kann, wenn diese Hülsenbereiche funktionsrelevante Formen aufweisen, beispielsweise solche Formen, die mit dem Bolzen korrespondieren sollen. Darüber hinaus können deformierte Hülsenbereiche, die an der Wandstärkenverringerung gezielt gebildet werden, bei der fertigen Spreizhülse als funktionale Elemente dienen, beispielsweise Haltenasen bilden, wie weiter unten noch im Detail erläutert wird, so dass in besonders einfacher Weise ein besonders leistungsfähiger Spreizanker erhalten werden kann. An der Wandstärkenverringerung kann zum Beispiel eine Restwandstärke von ca. 0.2 mm gegeben sein. Zweckmässigerweise weist der bereitgestellte Hülsenrohling mehrere lokale Wandstärkenverringerungen auf, wodurch unter anderem in besonders einfacher Weise eine Spreizhülse mit besonders hoher Rundheit und guter Funktionalität erhalten werden kann.

Insbesondere kann sich die Wandstärkenverringerung in Axialrichtung erstrecken, vorzugsweise parallel zur Längsachse des Hülsenrohlings, was im Hinblick auf die Kräfteverteilung in der fertigen Spreizhülse beim Betrieb des Spreizankers vorteilhaft sein kann.

Besonders vorteilhaft ist es, dass die lokale Wandstärkenverringerung zumindest teilweise, vorzugsweise ausschliesslich, durch eine Nut im Hülsenrohling gebildet ist, vorzugsweise durch eine der Öffnung des Hülsenrohlings zugewandte Nut, das heisst durch eine hülseninnenseitige Nut. Demgemäss ist das an der Wandstärkenverringerung verbleibende Material relativ nahe an der Aussenseite des Hülsenrohlings angeordnet. Insbesondere kann hierdurch in besonders einfacher und zuverlässiger Weise gewährleistet werden, dass das verbleibende Material beim Durchmesserreduzieren radial auf der Hülsenaussenseite vortritt, wo es besonders wirkungsvolle funktionale Elemente der fertigen Spreizhülse bilden kann. Insbesondere kann die Wandstärkenverringerung ausschliesslich durch eine der Öffnung des Hülsenrohlings zugewandte Nut gebildet sein. Dies kann die Fertigung des Hülsenrohlings noch weiter vereinfachen.

Insbesondere kann vorgesehen werden, dass die Nut beim Durchmesserreduzieren des Hülsenrohlings zumindest abschnittsweise geschlossen wird. Demgemäss kommen beim Durchmesserreduzieren ehemals mit Abstand gegenüberliegende Flanken der Nut aneinander zur Anlage. Es wird beim Durchmesserreduzieren an der Wandstärkenverringerung eine Schliessfalte gebildet. Dies kann unter anderem im Hinblick auf die Leistungsfähigkeit der fertigen Spreizhülse und die Präzision des Fertigungsprozesses vorteilhaft sein.

Wie bereits weiter oben angedeutet kann vorzugsweise vorgesehen sein, dass der Hülsenrohling beim Durchmesserreduzieren des Hülsenrohlings an der lokalen Wandstärkenverringerung, insbesondere plastisch, und vorzugsweise nach aussen, ausgeknickt wird. Es wird also in bevorzugter Weise der Hülsenrohling beim Durchmesserreduzieren des Hülsenrohlings an der Wandstärkenverringerung plastisch deformiert und, vorzugsweise nach aussen hin, gefaltet, insbesondere wird die die Restwandstärke aufweisende, dünne Flanke nach aussen gedrückt und umgefaltet und/oder unter Ausbildung eines Wellenberges lokal aufgeworfen. Hierdurch kann zum Beispiel eine Nase erhalten werden, die einem Rutschen der fertigen Spreizhülse im Bohrloch entgegenwirkt. Insbesondere kann in besonders einfacher Weise eine besonders funktionale Spreizhülse erhalten werden. Durch Einwirkung der Backen kann das Material des Hülsenrohlings beim Ausknicken zusätzlich in Form gebracht werden. Es kann auch vorgesehen sein, dass der Hülsenrohling beim Durchmesserreduzieren des Hülsenrohlings an der lokalen Wandstärkenverringerung, insbesondere plastisch, nach innen ausgeknickt wird, beispielsweise in eine Nut im Bolzen hinein. Es kann auch an einer ersten lokalen Wandstärkenverringerung ein Ausknicken nach aussen und an einer zweiten lokalen Wandstärkenverringerung ein Ausknicken nach innen vorgesehen werden.

Besonders bevorzugt ist es, dass der Hülsenrohling durch gleichzeitiges Anpressen mehrerer Backen an den Hülsenrohling durchmesserreduziert wird, wobei die Backen beim Anpressen an den Hülsenrohling versetzt, insbesondere in Umfangsrichtung versetzt, zur Wandstärkenverringerung angeordnet werden. Dies kann die Fertigung von funktionalen Elementen an der Spreizhülse noch vereinfachen und/oder Werkzeugkosten reduzieren.

Eine andere bevorzugte Ausgestaltung der Erfindung liegt darin, dass der Hülsenrohling beim Durchmesserreduzieren des Hülsenrohlings mit dem Bolzen verzahnt wird. Demgemäss weist der Hülsenrohling eine strukturierte Innenoberfläche und der Bolzen eine strukturierte Aussenoberfläche auf, wobei beim Durchmesserreduzieren ein Eingriff zwischen den entsprechenden Strukturen bewirkt wird. Die Strukturen können, zumindest teilweise, erst während des Durchmesserreduzierens des Hülsenrohlings geformt werden. Besonders bevorzugt ist es jedoch, dass zumindest ein Teil der verzahnten Strukturen schon vor dem Schritt des Durchmesserreduzierens vorhanden ist. Insbesondere kann also vorgesehen sein, dass der Hülsenrohling vor dem Schritt des Durchmesserreduzierens eine strukturierte Innenkontur aufweist, die mit einer von einer Kreisform abweichenden strukturierten Aussenkontur des Bolzens zumindest teilweise korrespondiert. Hierdurch können in besonders einfacher Weise besonders leistungsfähige Spreizanker erhalten werden, insbesondere solche wie in der EP 2 848 825 A1 beschrieben. Das bevorzugte Verzahnen kann insbesondere beinhalten, dass beim Durchmesserreduzieren des Hülsenrohlings eine formschlüssig drehfeste Verbindung zwischen dem Hülsenrohling und dem Bolzen hergestellt wird. Die genannten Strukturen können zum Beispiel Leisten oder Nuten sein, die sich insbesondere in Axialrichtung erstrecken können.

Gemäss einer anderen zweckmässigen Weiterbildung der Erfindung kann die Öffnung im ringförmigen Hülsenrohling eine Durchgangsöffnung, also eine auf entgegengesetzten Seiten offene Öffnung sein. Hierdurch kann die Deformierung des Hülsenrohlings beim Durchmesserreduzieren noch einfacher kontrolliert werden, und es können in besonders einfacher Weise besonders runde Spreizhülsen erhalten werden. Grundsätzlich könnte die Öffnung im ringförmigen Hülsenrohling auch ein Sackloch sein, also eine nur einseitig offene Öffnung. In diesem Fall kann eine Spreizhülse mit einem Deckel erhalten werden, wobei der Deckel die vordere Stirnseite des Bolzens abdeckt. Der Deckel kann auch zum axialen Positionieren des Hülsenrohlings am Bolzen dienen, da er beim Aufschieben der Hülse auf den Bolzen vorne am Bolzen anschlägt.

Der Hülsenrohling kann besonders einfach und günstig in einem Fliesspressverfahren gefertigt werden. In einem solchen Fliesspressverfahren kann überdies die die Innenkontur des Hülsenrohlings, die beim fertigen Spreizanker auf dem Bolzen gleitet, besonders einfach und präzise gefertigt werden. Erfindungsgemäss ist vorgesehen, dass das Bereitstellen des Hülsenrohlings das Formen des Hülsenrohlings zu einem Napf in einem Fliesspressverfahren umfasst. Hierdurch kann die geometrische Präzision des Hülsenrohlings in besonders einfacher Weise noch weiter verbessert werden. Die zuvor genannten Fliesspressverfahren können insbesondere Rückwärts-Fliesspressverfahren sein, das heisst Verfahren, bei denen das Material rückwärts am Stempel entlang fliesst.

Insbesondere kann der bereitgestellte Bolzen eine Lastaufnahmeeinrichtung zum Einleiten von Zugkräften in den Bolzen aufweisen. Die Lastaufnahmeeinrichtung kann insbesondere als Aussengewinde, aber beispielsweise auch als Innengewinde oder als Nagelkopf, ausgebildet sein. Sie dient zur Einleitung von Zugkräften, die in Auszugsrichtung gerichtet sind, in den Bolzen.

Der Spreizkörper ist vorzugsweise in einem vorderen Bereich des Bolzens und/oder die gegebenenfalls vorhandene Lastaufnahmeeinrichtung in einem rückwärtigen Bereich des Bolzens angeordnet.

Das Aussenprofil des Hülsenrohlings kann am Ende des Verfahrens, das heisst insbesondere nachdem der Hülsenrohling zur fertigen Spreizhülse geformt worden ist, vorzugsweise rotationssymmetrisch sein. Der Hülsenrohling und/oder die Spreizhülse kann Spreizschlitze aufweisen, die von der vorderen Stirnseite des Hülsenrohlings beziehungsweise der Spreizhülse ausgehen. Diese Spreizschlitze können das radiale Spreizen der Spreizhülse durch den Spreizkörper erleichtern. Die Spreizschlitze können auch erst beim Installieren des Spreizankers aus einer oder aus mehreren Wandstärkenverringerungen entstehen, welche beim Installieren aufreissen.

Mit einem erfindungsgemässen Verfahren kann ein Spreizanker hergestellt werden, der ausgestattet ist mit einem Bolzen und einer Spreizhülse, welche den Bolzen umgibt, wobei der Bolzen in einem rückwärtigen Bereich, insbesondere Endbereich, eine Lastaufnahmeeinrichtung zum Einleiten von Zugkräften in den Bolzen und in einem vorderen Bereich, insbesondere Endbereich, einen Spreizkörper zum Aufspreizen der den Bolzen umgebenden Spreizhülse aufweist. Der Spreizkörper ist insbesondere dafür vorgesehen, die Spreizhülse zum Verankern des Spreizankers radial nach aussen zu drängen wenn der Spreizkonus in Auszugsrichtung relativ zur Spreizhülse versetzt wird.

Nach einem ersten Aspekt des Spreizankers ist vorgesehen, dass die Spreizhülse einen geschlossenen Ring bildet, durch welchen der Bolzen hindurch verläuft, wobei der Bolzen zwischen dem rückwärtigen Bereich und dem vorderen Bereich einen Axialanschlag für die Spreizhülse aufweist. Die Spreizhülse ist insbesondere vor dem Axialanschlag angeordnet, das heisst auf der dem Spreizkörper zugewandten Seite des Axialanschlags. Gemäss diesem Aspekt wird eine geschlossen ringförmig ausgeführte Spreizhülse an einem Spreizanker des Bolzentyps vorgesehen, das heisst insbesondere an einem solchen Spreizanker, der mit einer kurzer Spreizhülse, die rückwärts nicht aus dem Loch herausreicht, und an seinem Bolzen mit einen Axialanschlag versehen ist, welcher einen Mitnehmer für die Spreizhülse zum Einbringen der Spreizhülse in das Loch im Substrat bildet. Das erfindungsgemässe Verfahren ermöglicht es, auch Anker des Bolzentyps, bei denen aufgrund der bestimmungsgemässen Wirkung des Axialanschlags ein Aufschieben der Spreizhülse vom rückwärtigen Ende des Bolzens her nicht möglich ist, mit einer geschlossen ringförmig ausgebildeten Spreizhülse zu versehen. Wie auch schon obenstehend beschrieben wurde können geschlossen ringförmige Spreizhülsen, also solche Spreizhülsen, welche zumindest bereichsweise einen Torus bilden und den Bolzen zumindest bereichsweise um den ganzen Umfang herum ohne Schlitz umgeben, im Vergleich zu einer Hülse mit einem offenen Schlitz besonders steif ausgeführt werden, was das Auszugsverhalten des Spreizankers verbessern kann. Darüber hinaus kann bei geschlossen ringförmigen Spreizhülsen die Spreizkraft besonders gleichmässig am Umfang der Spreizhülse verteilt werden, was zu besonders hohen Auszugskräften, insbesondere nahe dem Betonversagen, führen kann. Schliesslich ermöglicht eine geschlossene Spreizhülse in besonders zuverlässiger Weise eine Beschichtung auf die äussere Hülsenmantelfläche aufzutragen.

Der Axialanschlag ist zumindest axial fest, vorzugsweise fest, am Bolzen angeordnet und insbesondere einstückig mit dem Bolzen ausgebildet. Der Axialanschlag kann beispielsweise an einem ringförmigen Bund des Bolzens ausgebildet sein. Der Axialanschlag ist insbesondere zwischen dem Spreizkörper und dem rückwärtigen Bereich des Bolzens angeordnet und begrenzt eine Verschiebung der Spreizhülse vom Spreizkörper hinweg zum rückwärtigen Ende des Bolzens hin. Vorzugsweise bildet der Spreizkörper einen weiteren Axialanschlag für die Spreizhülse, nämlich einen Axialanschlag, welcher eine Verschiebung der Spreizhülse zum vorderen Ende des Bolzens hin begrenzt. Sowohl der Axialanschlag als auch der Spreizkörper bilden somit jeweils ein einseitiges Axiallager für die Spreizhülse.

Nach einem zweiten Aspekt des Spreizankers ist vorgesehen, dass die Spreizhülse zumindest eine radial, insbesondere aussenseitig, an der Spreizhülse vorstehende Nase aufweist, welche an einer Schliessfalte der Spreizhülse angeordnet ist. Dieser zweite Aspekt des Spreizankers kann zusätzlich oder alternativ zum zuvor genannten ersten Aspekt des Spreizankers realisiert werden. Auch der zweite Aspekt des Spreizankers kann fertigungstechnisch in einem erfindungsgemässen Verfahren realisiert werden. Insbesondere kann gemäss dem zweiten Aspekt des Spreizankers die radial an der Spreizhülse vorstehende Nase durch eine Ausknickung an einer Wandstärkenverringerung der Spreizhülse gebildet sein, wobei die Ausknickung beim Durchmesserreduzieren des die Spreizhülse bildenden Hülsenrohlings gebildet wurde. Demgemäss kann also die Nase radial ausserhalb einer Schliessfalte an einer lokalen Wandstärkenverringerung der Spreizhülse gebildet sein. Insbesondere kann die so ausgestaltete Nase eine Doppelfunktion innehaben: einerseits kann sie aufgrund ihres lokalen Überstandes eine Verankerung mit der Bohrlochwand des umgebenden Substrats bewirken. Andererseits kann sie aufgrund ihrer Anordnung an einer Schliessfalte eine Sollbruchstelle definieren, an der die Spreizhülse beim Aufschieben der Spreizhülse auf den Spreizkörper bevorzugt aufreisst, wobei vorzugsweise Spreizlappen gebildet werden. Insbesondere kann die Spreizhülse vor dem Spreizvorgang vollständig geschlossen sein, was insbesondere beinhalten kann, dass keine getrennten Spreizlappen vor dem Anziehen der Mutter vorhanden sind. Die geschlossen ringförmige Spreizhülse kann jedoch auch schon vor dem Spreizvorgang Spreizlappen aufweisen, soweit die Spreizlappen die geschlossene Ringform nicht unterbrechen.

Die Anordnung der Nase der Spreizhülse an einer lokalen Wandstärkenverringerung der Spreizhülse kann als weiterer unabhängiger Aspekt des Spreizankers angesehen werden.

Besonders bevorzugt ist es, dass die Spreizhülse und der Bolzen im Querschnitt des Bolzens miteinander verzahnt sind. Demgemäss weisen also die Spreizhülse und der Bolzen jeweils von einer Kreisform abweichende Querschnitte auf, welche im Querschnitt des Spreizankers ineinander eingreifen. Beispielsweise können Verzahnungen wie in EP 2 848 825 A1 beschrieben vorgesehen werden.

Die Erfindung wird nachfolgend anhand bevorzugter Ausführungsbeispiele näher erläutert, die schematisch in den beiliegenden Figuren dargestellt sind, wobei einzelne Merkmale der nachfolgend gezeigten Ausführungsbeispiele im Rahmen der Erfindung grundsätzlich einzeln oder in beliebiger Kombination realisiert werden können. In den Figuren zeigen schematisch:
- Figuren 1 bis 9:: vereinfachende Darstellungen der Werkstücke in aufeinanderfolgenden Prozessstadien bei der Durchführung eines erfindungsgemässen Herstellungsverfahrens, in den Figuren 1 bis 4 im Längsschnitt und in den Figuren 5 bis 9 in perspektivischer Ansicht, mit einem Spreizanker als Endprodukt in Figur 9;
- Figur 10:: eine Querschnittsansicht durch die Werkstücke und die Werkzeuge zu Beginn des Prozessstadiums der Figur 8;
- Figur 11:: eine Querschnittsansicht analog Figur 10 durch die Werkstücke und die Werkzeuge zum Ende des Prozessstadiums der Figur 8;
- Figur 12:: eine Längsschnittansicht durch einen in einem Substrat angeordneten Spreizanker; und
- Figur 13:: eine Querschnittsansicht A-A durch den Anker der Figur 12.

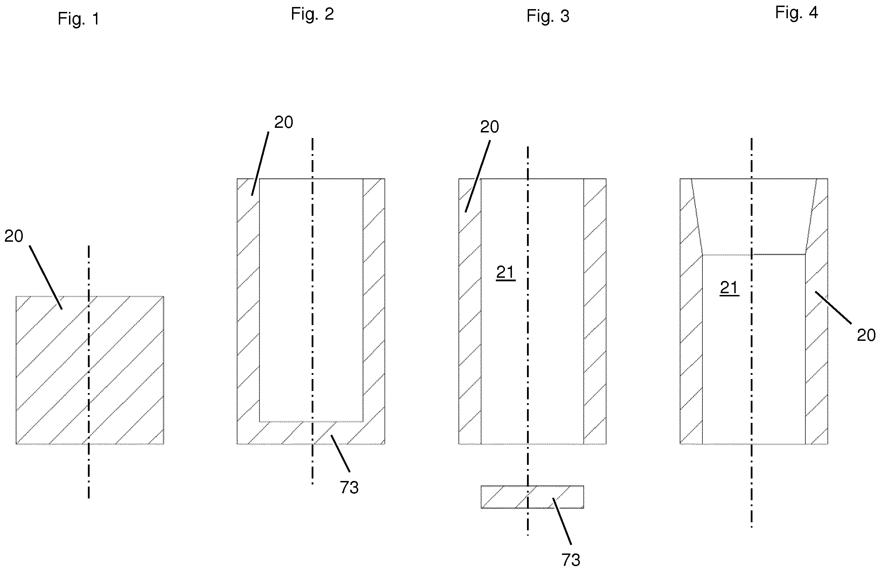

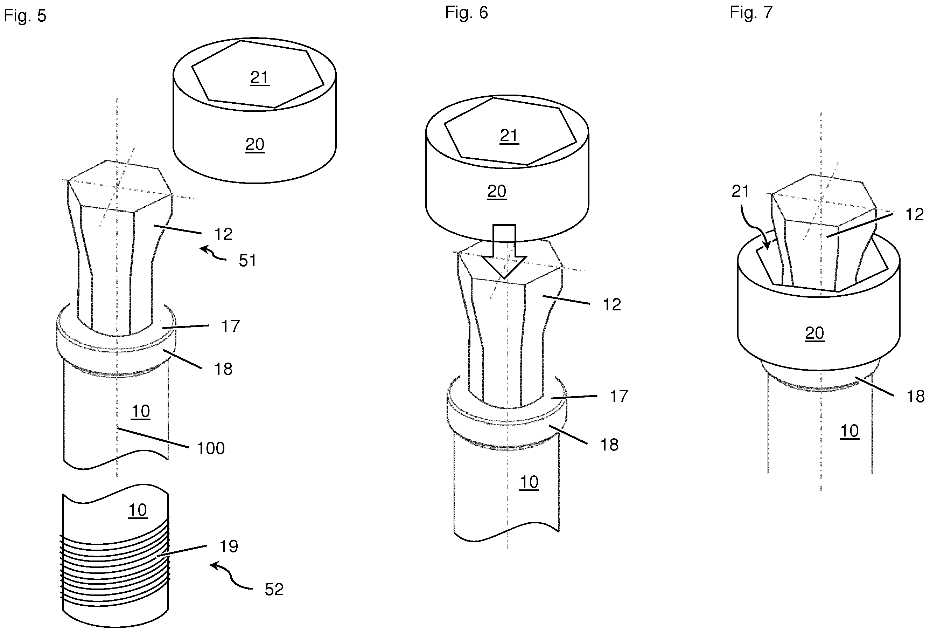

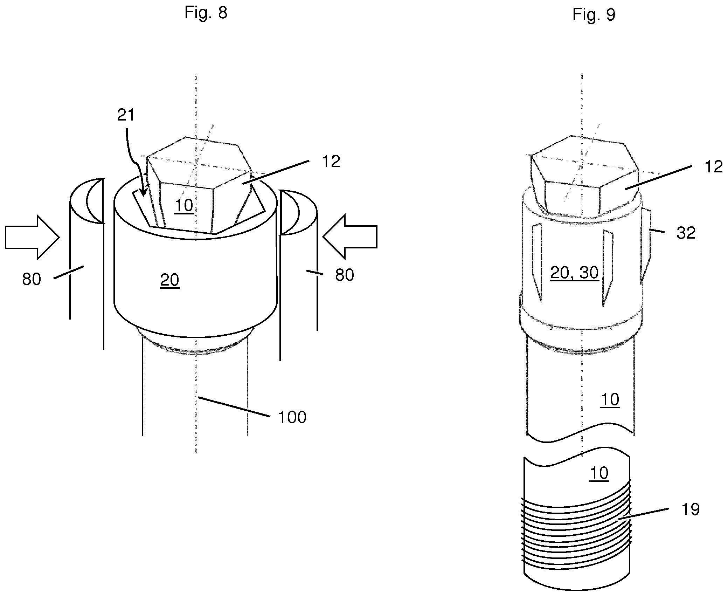

Die Figuren 1 bis 9 zeigen aufeinanderfolgende Prozessstadien bei der Herstellung eines Spreizankers in einem erfindungsgemässen Herstellungsverfahren. Der Übersichtlichkeit halber ist der rückwärtige Bereich des Bolzens mit der Lastaufnahmeeinrichtung nur in den Figuren 5 und 9 gezeigt, und auch dort nur unterbrochen.

In einem ersten Prozessschritt wird von einem ausgedehnten Draht ein kurzes Stück abgelängt und somit wie in Figur 1 gezeigt ein als Drahtstück ausgebildeter Hülsenrohling 20 erhalten.

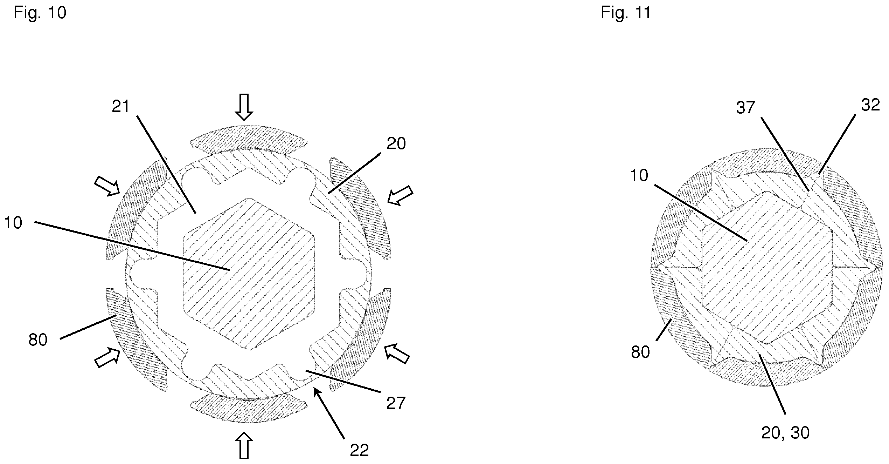

Sodann wird der Hülsenrohling 20 in einem Fliesspressverfahren, insbesondere in einem Rückwärts-Fliesspressverfahren, vorzugsweise einem Napf-Rückwärts-Fliesspressverfahren, zu dem in Figur 2 gezeigten Napf mit einem Boden 73 umgeformt. In diesem Fliesspressverfahren kann auch die beispielsweise in der Querschnittsansicht der Figur 10 gezeigte Innenkontur des Hülsenrohlings 20 in den Hülsenrohling 20 eingebracht werden.

In einem anschliessenden Verfahrensschritt, der beispielsweise ein Stanzschritt sein kann, wird der Boden 73 des Hülsenrohlings 20 entfernt und hierbei wie in Figur 3 gezeigt ein rohrförmiges Werkstück erhalten, welches eine als Durchgangsöffnung ausgebildete Öffnung 21 geschlossen ringförmig umgibt.

Optional kann der Hülsenrohling 20 noch weiter strukturiert werden und hierdurch beispielsweise eine in Figur 4 gezeigte Form erhalten werden.

Im nächsten Verfahrensschritt wird wie in Figur 5 gezeigt zusätzlich ein Bolzen 10 bereitgestellt. Dieser Bolzen 10 weist in seinem rückwärtigen Bereich 52 eine beispielhaft als Aussengewinde dargestellte Lastaufnahmeeinrichtung 19 zum Einleiten von Zugkräften in den Bolzen 10 und in seinem vorderen Bereich 51 einen beispielhaft als Spreizkonus mit polygonalem Querschnitt dargestellten Spreizkörper 12 auf, an dem sich der Bolzenquerschnitt nach vorne hin zum radialen Aufspreizen einer Spreizhülse 30 erweitert. Zwischen dem Spreizkörper 12 und der Lastaufnahmeeinrichtung 19 und/oder dem rückwärtigen Bereich 52 weist der Bolzen 10 einen beispielsweise als Ringschulter ausgebildeten Axialanschlag 17 für die Spreizhülse 30 auf. Dieser Axialanschlag 17 ist vorzugsweise geschlossen ringförmig ausgebildet und/oder an einem insbesondere einstückig mit dem Bolzen 10 ausgebildeten ringförmigen Bund 18 gebildet.

Die Öffnung 21 im Hülsenrohling 20 ist so bemessen, dass der Hülsenrohling 20 zum einen über den Spreizkörper 12 des Bolzen 10 übergestreift werden kann, zum anderen ist sie jedoch so bemessen, dass der Hülsenrohling 20 vom Axialanschlag 17 axial gestoppt wird. Vorzugsweise ist hierzu die als Durchgangsöffnung ausgeführte Öffnung 21 des Hülsenrohlings 20 querschnittsgrösser als der Spreizkörper 12, jedoch querschnittskleiner als der Axialanschlag 17 und der ringförmige Bund 18.

Im nächsten Schritt wird wie in Figur 6 mit einem Pfeil angedeutet der Hülsenrohling 20 vom vorderen Ende des Bolzens 10 her zumindest teilweise über den Spreizkörper 12 hinweg auf den Bolzen 10 aufgeschoben, und zwar insbesondere so weit, bis der Hülsenrohling 20 am Axialanschlag 17 anschlägt. Der Bolzen 10 wird dabei in die als Durchgangsöffnung ausgebildete Öffnung 21 im Spreizkörper 12 eingeführt, und zwar so weit, bis der Bolzen 10 mit seinem vorderen Ende und vorzugsweise zumindest eines Teils des Spreizkörpers 12 wieder aus dem Hülsenrohling 20 hervortritt, das heisst der Bolzen 10 wird durch den Hülsenrohling 20 hindurchgesteckt. Der resultierende Zustand ist in Figur 7 gezeigt. Das Aufschieben des Hülsenrohling 20 auf den Bolzen 10 kann durch eine Bewegung des Hülsenrohlings 20, eine Bewegung des Bolzens 10 oder eine kombinierte Bewegung sowohl des Hülsenrohlings 20 als auch des Bolzens 10 bewirkt werden.

Anschliessend wird der Hülsenrohling 20 zusammen mit dem innenliegenden Bolzen 10 wie in den Figuren 8 und 10 gezeigt zwischen Backen 80 einer Umformeinrichtung angeordnet. Wie in den Figuren 8 und 10 mit Pfeilen angedeutet ist, wird der Hülsenrohling 20 sodann von den Backen 80 durckbeaufschlagt, und zwar jeweils in radialer Richtung, insbesondere bezogen auf die Längsachse 100 des noch immer im Inneren des Hülsenrohlings 20 angeordneten Bolzens 10. Durch die Wirkung der Backen 80 wird der Hülsenrohling 20 in senkrecht zur Längsachse 100 des Bolzens 10 verlaufenden Querschnittsebenen (solche Ebenen sind in den Figuren 10 und 11 dargestellt) komprimiert und in seinem Durchmesser reduziert, und zwar vorzugsweise so weit, dass der Hülsenrohling 20 fortan nicht mehr über den Spreizkörper 12 hinweg, das heisst nach vorne, vom Bolzen 10 abgezogen werden kann. Hierbei wird aus dem Hülsenrohling 20 wie in den Figuren 9 und 11 gezeigt, gegebenenfalls nach optionalen Nachbearbeitungsschritten, die Spreizhülse 30 erhalten.

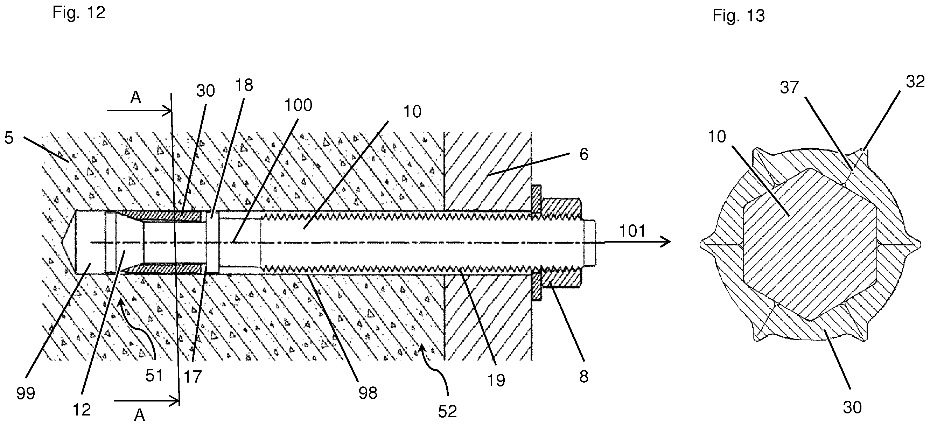

Wie insbesondere Figur 10 zeigt weist der Hülsenrohling 20 vor dem Beaufschlagen mit den Backen 80 eine Innenkontur auf. Diese Innenkontur kann insbesondere im zuvor genannten Fliesspressverfahren gefertigt werden. Die Innenkontur des Hülsenrohlings 20 stellt eine Negativform zu einer Aussenkontur des Bolzens 10 dar, wobei letzter vorzugsweise von einer Kreisform abweicht. Dies hat zur Folge, dass der Hülsenrohling 20 und der Bolzen 10 beim Durchmesserreduzieren des Hülsenrohlings 20 so miteinander in Eingriff gelangen, dass die fertige Spreizhülse 30 und der Bolzen 10 wie in den Figuren 11 und 13 gezeigt im Querschnitt des Bolzens 10 miteinander verzahnt sind, also sozusagen ineinander passen.

Wie insbesondere Figur 10 weiter zeigt weist der Hülsenrohling 20 vor dem Beaufschlagen mit den Backen 80 ferner lokale Wandstärkenverringerungen 22 auf, im vorliegenden Ausführungsbeispiel sechs Wandstärkenverringerungen 22, an denen die Wandstärke des Hülsenrohlings 20 jeweils lokal kleiner ist als in der Umgebung. Vorzugsweise werden die Wandstärkenverringerungen 22 jeweils durch eine innenseitig im Hülsenrohling 20 angeordnete, das heisst der Öffnung 21 zugewandte Nut 27 gebildet. Vorzugsweise werden die Wandstärkenverringerungen 22 und/oder Nuten 27 wie in Figur 10 gezeigt jeweils in Umfangsrichtung versetzt zu den Backen 80 angeordnet, wobei auch Ausführungsbeispiele denkbar sind, bei denen zumindest ein Teil der Wandstärkenverringerungen 22 und/oder Nuten 27 von den Backen 80 radial bedeckt sind.

Wie insbesondere ein Vergleich der Figuren 10 und 11 zeigt, dienen die Wandstärkenverringerungen 22 als Stauchzonen, in denen das Material des Hülsenrohlings 20 beim Durchmesserreduzieren gezielt in Umfangsrichtung gestaucht wird. Insbesondere werden die Nuten 27 beim Durchmesserreduzieren unter Bildung jeweils einer Schliessfalte 37 geschlossen, wobei das an den Wandstärkenverringerungen 22 noch verbleibende, radial aussenseitig der Nuten 27 befindliche Material des Hülsenrohlings 20 unter Bildung von Nasen 32 radial nach aussen ausgeknickt wird. Bei dem hieraus resultierenden Hülsenquerschnitt, der insbesondere in den Figuren 11 und 13, aber auch in Figur 9 erkennbar ist, weist die Spreizhülse 30 lokal radial nach aussen vorstehende Nasen 32 auf, wobei die Nasen 32 jeweils einer in der Spreizhülse 30 ausgebildeten Schliessfalte 37, mithin einer Materialschwächung der Spreizhülse 30, radial aussenseitig vorgelagert sind.

Die Figuren 9, 11, 12 und 13 zeigen den im erfindungsgemässen Herstellungsverfahren erhaltenen Spreizanker, Figur 9 dabei im Rahmen der bestimmungsgemässen Anwendung des Spreizankers. Beim bestimmungsgemässen Installieren des Spreizankers wird der Bolzen 10 mit seinem vorderen Bereich 51 und dem Spreizkörper 12 voran in Richtung der Längsachse 100 des Bolzens 10 in ein Bohrloch 99 im Substrat 5 aus Figur 9 geschoben. Aufgrund des Axialanschlags 17 wird dabei auch die Spreizhülse 30 in das Bohrloch 99 eingebracht. Sodann wird der Bolzen 10, beispielsweise durch Anziehen einer auf der als Aussengewinde ausgebildeten Lastaufnahmeeinrichtung 19 angeordneten Mutter 8, wieder ein Stück weit in Auszugsrichtung 101 aus dem Bohrloch 99 herausgezogen. Aufgrund ihrer Reibung mit der Wand 98 des Bohrlochs 99 bleibt die Spreizhülse 30 dabei zurück und es kommt infolgedessen zu einer Verschiebung des Bolzens 10 relativ zur Spreizhülse 30, im Rahmen derer der sich aufweitende Spreizkörper 12 des Bolzens 10 radial gegen die Spreizhülse 30 wirkt und diese gegen die Wand 98 des Bohrlochs 99 presst. Durch diesen Mechanismus wird der Spreizanker im Substrat 5 fixiert. Der installierte Zustand des Spreizankers, in dem er im Substrat 5 fixiert ist, ist in Figur 9 gezeigt. Mittels der Mutter 8 kann ein Anbauteil 6 am Substrat 5 festgelegt werden.

Die an der Spreizhülse 30 vorstehenden Nasen 32 können sich beim Einführen des Spreizankers in das Bohrloch 99 mit der Wand 98 des Bohrlochs 99 verkrallen und somit eine Verdrehsicherung oder Zugsicherung für die Spreizhülse 30 bilden.

Die Schliessfalten 37 der Spreizhülse 30, die an den ehemaligen Nuten 27 und Wandstärkenverringerungen 22 des Hülsenrohlings 20 gebildet sind, und die sich vorzugsweise radial unterhalb der Nasen 32 befinden, können Sollbruchstellen bilden, an denen die Spreizhülse 30 bei der Installation, vorzugsweise unter Bildung von Spreizlappen, aufreisst. Die geschlossen ringförmige Spreizhülse 30 kann auch bereits vor der Installation Schlitze und Spreizlappen aufweisen. Vorzugsweise bilden sich die Spreizlappen aber zumindest teilweise erst während der Installation aus, nämlich durch Aufreissen der Spreizhülse 30 an den Schliessfalten 37.

## Patentansprüche

1. Verfahren zum Herstellen eines Spreizankers, bei dem
- ein Bolzen (10) bereitgestellt wird, der einen Spreizkörper (12) zum Aufspreizen einer den Bolzen (10) umgebenden Spreizhülse (30) aufweist,
- ein ringförmiger Hülsenrohling (20) mit einer Öffnung (21) bereitgestellt wird,
- der Bolzen (10) in die Öffnung (21) des ringförmigen Hülsenrohlings (20) eingebracht wird, und
- der ringförmige Hülsenrohling (20) durchmessereduziert wird während sich der Bolzen (10) in der Öffnung (21) des ringförmigen Hülsenrohlings (20) befindet,
**dadurch gekennzeichnet,**
- **dass** das Bereitstellen des Hülsenrohlings (20) das Formen des Hülsenrohlings (20) zu einem Napf in einem Fliesspressverfahren umfasst.

2. Verfahren nach Anspruch 1,
**dadurch gekennzeichnet,**
**dass** der Hülsenrohling (20) durch Aufbringen von Radialkräften auf den Hülsenrohling (20) durchmessereduziert wird.

3. Verfahren nach einem der vorstehenden Ansprüche,
**dadurch gekennzeichnet,**
**dass** der Hülsenrohling (20) durch Anpressen zumindest einer Backe (80) an den Hülsenrohling (20), vorzugsweise durch gleichzeitiges Anpressen mehrerer Backen (80) an den Hülsenrohling (20), durchmesserreduziert wird, oder/und dass der Hülsenrohling (20) durch Einbringen des Hülsenrohlings (20) in eine Reduziermatritze durchmesserreduziert wird.

4. Verfahren nach einem der vorstehenden Ansprüche,
**dadurch gekennzeichnet,**
**dass** der Hülsenrohling (20) einen geschlossenen Ring bildet, der die die Öffnung (21) umgibt.

5. Verfahren nach einem der vorstehenden Ansprüche,
**dadurch gekennzeichnet,**
**dass** beim Einbringen des Bolzens (10) in die Öffnung (21) des Hülsenrohlings (20) der Spreizkörper (12) zumindest bereichsweise durch den Hülsenrohling (20) hindurchgeschoben wird.

6. Verfahren nach einem der vorstehenden Ansprüche,
**dadurch gekennzeichnet,**
**dass** der Hülsenrohling (20) durchmessereduziert und hierbei zumindest einseitig, insbesondere am Spreizkörper (12), axial am Bolzen (10) festgelegt wird während sich der Bolzen (10) in der Öffnung (21) des ringförmigen Hülsenrohlings (20) befindet.

7. Verfahren nach einem der vorstehenden Ansprüche,
**dadurch gekennzeichnet,**
**dass** der Bolzen (10) einen Axialanschlag (17) für den Hülsenrohling (20) aufweist, und dass der Bolzen (10) so tief in die Öffnung (21) des Hülsenrohlings (20) eingebracht wird bis der Hülsenrohling (20) am Axialanschlag (17) anschlägt.

8. Verfahren nach einem der vorstehenden Ansprüche,
**dadurch gekennzeichnet,**
**dass** der bereitgestellte Hülsenrohling (20) zumindest eine lokale Wandstärkenverringerung (22) aufweist.

9. Verfahren nach Anspruch 8,
**dadurch gekennzeichnet,**
**dass** die lokale Wandstärkenverringerung (22) zumindest teilweise durch eine der Öffnung (21) des Hülsenrohlings (20) zugewandte Nut (27) im Hülsenrohling (20) gebildet ist.

10. Verfahren nach Anspruch 9,
**dadurch gekennzeichnet,**
**dass** die Nut (27) beim Durchmesserreduzieren des Hülsenrohlings (20) zumindest abschnittsweise geschlossen wird.

11. Verfahren nach einem der Ansprüche 8 bis 10,
**dadurch gekennzeichnet,**
**dass** der Hülsenrohling (20) beim Durchmesserreduzieren des Hülsenrohlings (20) an der lokalen Wandstärkenverringerung (22) ausgeknickt wird.

12. Verfahren nach einem der Ansprüche 8 bis 11,
**dadurch gekennzeichnet,**
**dass** der Hülsenrohling (20) durch gleichzeitiges Anpressen mehrerer Backen (80) an den Hülsenrohling (20) durchmesserreduziert wird, wobei die Backen (80) beim Anpressen an den Hülsenrohling (20) versetzt zur Wandstärkenverringerung (22) angeordnet werden.

13. Verfahren nach einem der vorstehenden Ansprüche,
**dadurch gekennzeichnet,**
**dass** der Hülsenrohling (20) beim Durchmesserreduzieren des Hülsenrohlings (20) mit dem Bolzen (10) verzahnt wird.

14. Verfahren nach einem der vorstehenden Ansprüche,
**dadurch gekennzeichnet,**
**dass** die Öffnung (21) im ringförmigen Hülsenrohling (20) eine Durchgangsöffnung ist.

15. Verfahren nach einem der vorstehenden Ansprüche,
**dadurch gekennzeichnet,**
**dass** der bereitgestellte Bolzen (10) eine Lastaufnahmeeinrichtung (19) zum Einleiten von Zugkräften in den Bolzen (10) aufweist.

## Claims

1. Method for producing an expansion anchor, in which
- a bolt (10) is provided, which has an expansion body (12) for spreading out an expansion sleeve (30) surrounding the bolt (10),
- a ring-shaped sleeve blank (20) with an opening (21) is provided,
- the bolt (10) is inserted into the opening (21) of the ring-shaped sleeve blank (20) and
- the ring-shaped sleeve blank (20) has its diameter reduced whilst the bolt (10) is in the opening (21) of the ring-shaped sleeve blank (20),
**characterised in that**
- providing the sleeve blank (20) comprises moulding the sleeve blank (20) into a cup in an extrusion method.

2. Method according to claim 1,
**characterised in that**
the sleeve blank (20) has its diameter reduced by applying radial forces to the sleeve blank (20).

3. Method according to one of the previous claims,
**characterised in that**
the sleeve blank (20) has its diameter reduced by pressing at least one cheek (80) on the sleeve blank (20), preferably by pressing several cheeks (80) on the sleeve blank (20) at the same time and/or
the sleeve blank (20) has its diameter reduced by inserting the sleeve blank (20) into a reduction die.

4. Method according to one of the previous claims,
**characterised in that**
the sleeve blank (20) forms a closed ring, which surrounds the opening (21).

5. Method according to one of the previous claims,
**characterised in that**
when inserting the bolt (10) into the opening (21) of the sleeve blank (20) the expansion body (12) is pushed through the sleeve blank (20) at least in certain areas.

6. Method according to one of the previous claims,
**characterised in that**
the sleeve blank (20) has its diameter reduced and in this is fixed axially to the bolt (10) at least on one side, particularly to the expansion body (12), whilst the bolt (10) is in the opening (21) of the ring-shaped sleeve blank (20).

7. Method according to one of the previous claims,
**characterised in that**
the bolt (10) has an axial stop (17) for the sleeve blank (20) and the bolt (10) is inserted into the opening (21) of the sleeve blank (20) so deep until the sleeve blank (20) hits the axial stop (17).

8. Method according to one of the previous claims,
**characterised in that**
the sleeve blank (20) provided has at least one local reduction in wall thickness (22).

9. Method according to claim 8,
**characterised in that**
the local reduction in wall thickness (22) is formed at least partly by a groove (27) in the sleeve blank (20) facing towards the opening (21) of the sleeve blank (20).

10. Method according to claim 9,
**characterised in that**
the groove (27) is closed at least in certain sections when the sleeve blank (20) has its diameter reduced.

11. Method according to one of claims 8 to 10,
**characterised in that**
the sleeve blank (20) is buckled at the local reduction in wall thickness (22) when the sleeve blank (20) has its diameter reduced.

12. Method according to one of claims 8 to 11,
**characterised in that**
the sleeve blank (20) has its diameter reduced by pressing several cheeks (80) on the sleeve blank (20) at the same time, in which the cheeks (80) are arranged offset to the reduction in wall thickness (22) when pressing on the sleeve blank (20).

13. Method according to one of the previous claims,
**characterised in that**
the sleeve blank (20) is interlocked with the bolt (10) when the sleeve blank (20) has its diameter reduced.

14. Method according to one of the previous claims,
**characterised in that**
the opening (21) in the ring-shaped sleeve blank (20) is a through opening.

15. Method according to one of the previous claims,
**characterised in that**
the bolt (10) provided has a load suspension device (19) for introducing tensile forces into the bolt (10).

## Revendications

1. Procédé pour fabriquer un ancrage expansible, comportant les étapes consistant à :
- fournir un boulon (10) comportant un élément d'expansion (12) pour écarter une douille d'expansion (30) entourant le boulon (10),
- fournir une ébauche de douille annulaire (20) ayant une ouverture (21),
- insérer le boulon (10) dans l'ouverture (21) de l'ébauche de douille annulaire (20), et
- réduire l'ébauche de douille annulaire (20) en diamètre lorsque le boulon (10) se trouve dans l'ouverture (21) de l'ébauche de douille annulaire (20), **caractérisé en ce que**
- la fourniture de l'ébauche de douille (20) comprend la formation de l'ébauche de douille (20) pour obtenir une cuvette dans un procédé d'extrusion.

2. Procédé selon la revendication 1,
**caractérisé en ce que**
l'ébauche de douille (20) est réduite en diamètre en appliquant des forces radiales sur l'ébauche de douille (20).

3. Procédé selon l'une des revendications précédentes,
**caractérisé en ce que**
l'ébauche de douille (20) est réduite en diamètre en pressant au moins une mâchoire (80) contre l'ébauche de douille (20), de préférence en pressant simultanément plusieurs mâchoires (80) contre l'ébauche de douille (20), et/ou
l'ébauche de douille (20) est réduite en diamètre en insérant l'ébauche de douille (20) dans une matrice de réduction.

4. Procédé selon l'une des revendications précédentes,
**caractérisé en ce que**
l'ébauche de douille (20) forme une bague fermée qui entoure l'ouverture (21).

5. Procédé selon l'une des revendications précédentes,
**caractérisé en ce que**
lors de l'insertion du boulon (10) dans l'ouverture (21) de l'ébauche de douille (20), l'élément d'expansion (12) est poussé, au moins par endroits, à travers l'ébauche de douille (20).

6. Procédé selon l'une des revendications précédentes,
**caractérisé en ce que**
l'ébauche de douille (20) est réduite en diamètre et est ainsi fixée axialement sur le boulon (10), au moins d'un côté, en particulier sur l'élément d'expansion (12), lorsque le boulon (10) se trouve dans l'ouverture (21) de l'ébauche de douille annulaire (20).

7. Procédé selon l'une des revendications précédentes,
**caractérisé en ce que**
le boulon (10) comporte une butée axiale (17) pour l'ébauche de douille (20), et
le boulon (10) est inséré profondément dans l'ouverture (21) de l'ébauche de douille (20) jusqu'à ce que l'ébauche de douille (20) vienne en butée contre la butée axiale (17).

8. Procédé selon l'une des revendications précédentes,
**caractérisé en ce que**
l'ébauche de douille (20) fournie comporte au moins une réduction d'épaisseur de paroi locale (22).

9. Procédé selon la revendication 8,
**caractérisé en ce que**
la réduction d'épaisseur de paroi locale (22) est formée, au moins en partie, par une rainure (27) dans l'ébauche de douille (20) dirigée vers l'ouverture (21) de l'ébauche de douille (20).

10. Procédé selon la revendication 9,
**caractérisé en ce que**
la rainure (27) est fermée au moins partiellement par la réduction de diamètre de l'ébauche de douille (20) .

11. Procédé selon l'une des revendications 8 à 10,
**caractérisé en ce que**
l'ébauche de douille (20) est infléchie sur la réduction d'épaisseur de paroi locale (22) lors de la réduction de diamètre de l'ébauche de douille (20).

12. Procédé selon l'une des revendications 8 à 11,
**caractérisé en ce que**
l'ébauche de douille (20) est réduite en diamètre en pressant simultanément plusieurs mâchoires (80) contre l'ébauche de douille (20), les mâchoires (80) étant agencées de manière décalée par rapport à la réduction d'épaisseur de paroi (22) lors de la pression contre l'ébauche de douille (20).

13. Procédé selon l'une des revendications précédentes,
**caractérisé en ce que**
l'ébauche de douille (20) est en prise avec le boulon (10) lors de la réduction de diamètre de l'ébauche de douille (20).

14. Procédé selon l'une des revendications précédentes,
**caractérisé en ce que**
l'ouverture (21) dans l'ébauche de douille annulaire (20) est une ouverture traversante.

15. Procédé selon l'une des revendications précédentes,
**caractérisé en ce que**
le boulon (10) fourni comporte un dispositif d'absorption de charge (19) pour introduire des forces de traction dans le boulon (10).
